# FASCICULE DE BREVET EUROPEEN

(11) **EP 1 210 244 B1**
(45) Date de publication et mention de la délivrance du brevet: **18.01.2006**
(21) Numéro de dépôt: 00958627.2
(22) Date de dépôt: 27.07.2000
(51) Int. Cl.: B60L 5/20

(54) **ELEMENT DE CONTACT ELECTRIQUE FROTTANT EN COMPOSITE CARBONE/CARBONE**
ELEKTRISCHES REIBUNGSKONTAKTELEMANT AUS KOHLENSTOFF/KOHLENSTOFF VERBUNDWERKSSTOFF
CARBON/CARBON COMPOSITE FRICTION ELECTRIC CONTACT ELEMENT

(30) Priorité: 30.07.1999 FR 9910102
(43) Date de publication de la demande: 05.06.2002
(73) Titulaire: Carbone Lorraine Applications Electriques, 80080 Amiens (FR)
(72) Inventeur: BOMMIER, Christophe, Basking Ridge, NJ 07290 (US); BRUNEAU, Jean-Louis, F-95150 Taverny (FR)
(74) Mandataire: Fénot, Dominique
(86) Numéro de dépôt international: PCT/FR2000/002154
(87) Numéro de publication internationale: WO 2001/008920

(56) Documents cités:
- EP-A- 0 212 666
- EP-A- 0 364 972
- EP-A- 0 872 374
- FR-A- 2 736 595
- US-A- 4 339 021

## Description

### Domaine de l'invention

La présente invention concerne les dispositifs de contact frottant, tels que les pantographes, les perches (notamment de trolley), les frotteurs de troisième rail ou les frotteurs industriels, qui sont utilisés pour le captage de courant électrique depuis un conducteur électrique fixe, tel qu'une caténaire ou un troisième rail, vers un véhicule, tel qu'un véhicule ferroviaire, un trolley-bus ou une rame de métro, qui peut être à l'arrêt ou en mouvement. L'invention concerne plus particulièrement l'élément frotteur (ou "bande de frottement") des dispositifs de contact frottant.

### Etat de la technique

Les dispositifs de contact frottant, tels que les pantographes utilisés sur les matériels ferroviaires, comprennent typiquement un dispositif de soutien mobile et une bande frottante (ou "bande de frottement"). Le dispositif de soutien supporte la bande frottante et permet de la mettre en contact avec un conducteur électrique fixe, tel qu'une caténaire (qui est en général un fil de cuivre dopé) ou un troisième rail, assurant ainsi le transfert de courant du conducteur fixe vers le véhicule en mouvement ou à l'arrêt. Dans le cas des pantographes, la bande frottante comprend l'élément frotteur du pantographe.

Les bandes de frottement sont considérées comme des produits d'usure remplaçables qui doivent posséder une série de propriétés d'usage. En particulier, et avant tout, les bandes de frottement doivent bien conduire le courant, c'est-à-dire qu'elles doivent présenter une faible résistance électrique, de manière à réduire les pertes d'énergie et les échauffements. En outre, les bandes de frottement doivent présenter des propriétés de frottement contre le conducteur fixe convenables, c'est-à-dire qui évitent une usure rapide aussi bien de la bande frottante que du conducteur fixe. Il est en particulier impératif d'éviter tout grippage et toute abrasion du conducteur fixe. De plus, dans le cas des pantographes, les bandes de frottement doivent être légères afin de minimiser l'inertie mécanique du dispositif de captage de courant, ce qui permet notamment de réduire l'amplitude des mouvements verticaux du pantographe lorsque le véhicule est en mouvement et d'éviter l'ouverture du contact entre l'élément frotteur et la caténaire qui peut créer des arcs électriques. D'autre part, les bandes de frottement doivent pouvoir résister à l'usure et à l'abrasion causées par les arcs électriques inévitables qui se développent entre le conducteur fixe et l'élément frotteur. De surcroît, dans le cas des pantographes, les bandes de frottement doivent présenter une grande résistance aux chocs mécaniques contre la caténaire car un bris de la bande frotteuse peut conduire à des avaries importantes du système de captage ou de la caténaire même. Elles doivent également résister à des températures pouvant éventuellement atteindre 300° à 400°C dans les applications les plus sévères. Enfin, les bandes de frottement doivent être faciles à monter et à remplacer.

Il est connu d'utiliser des bandes de frottement essentiellement métalliques munies de moyens pour améliorer les propriétés de friction et, éventuellement, de moyens pour augmenter la conductivité. Par exemple, il est connu d'utiliser des bandes en fer accompagnées d'un dispositif de lubrification, des bandes en fer fritté poreux incorporant des additifs (tels que des composés intermétalliques et du plomb) pour améliorer les propriétés de friction et ajouts de cuivre pour augmenter la conductivité, des bandes de cuivre fritté poreux incorporant des additifs (tels que des composés intermétalliques et du plomb) destinés à obtenir des propriétés de friction satisfaisantes, et des bandes en aluminium renforcé de fibres (telles que des fibres d'alumine) qui lui confèrent des propriétés de friction satisfaisantes. Ces bandes de frottement présentent toutefois une mauvaise résistance à l'abrasion causée par les arcs électriques, une usure du conducteur fixe appréciable et, sauf dans le cas des bandes en aluminium, un poids élevé.

Il est également connu d'utiliser des bandes de frottement comprenant une bande d'usure à base de graphite artificiel, de carbone amorphe ou d'un mélanges de ceux-ci, éventuellement imprégné de cuivre ou d'alliage de cuivre afin d'augmenter la conductivité électrique, et une bande métallique support pour assurer les fonctions mécaniques, car les bandes en graphite artificiel sont trop fragiles pour être utilisées seules. Les coûts de production de ces bandes mixtes sont aussi généralement plus élevés que ceux des bandes essentiellement métalliques.

La demande française FR 2 736 595 (correspondant au brevet américain US 5 657 842) décrit un capteur de courant pour véhicule comprenant un matériau composite en carbone renforcé par dés fibres en carbone et contenant du carbure de silicium pour augmenter la solidité du capteur et réduire son usure. Le carbure de silicium (SiC) est formé par réaction physico-chimique à haute température entre les fibres de carbone et du silicium liquide. Compte tenu de la taille des fibres et de la surface développée correspondante, cette réaction transforme une grande partie des fibres en SiC, ce qui réduit considérablement la conductivité électrique du matériau. Cette solution présente également l'inconvénient d'augmenter l'abrasivité du capteur vis-à-vis de la caténaire, à cause de la présence de SiC.

La demanderesse a donc recherché une bande de frottement légère, de plus grande longévité, de conductivité élevée, et de faible agressivité vis-à-vis du conducteur fixe, qui, de préférence, ne nécessite pas de support et qui permettent de réduire les coûts d'exploitation des installations utilisant des dispositifs de contact frottant.

### Description de l'invention

L'invention a pour objet une bande de frottement de dispositif de contact frottant, tel qu'un pantographe, comprenant une bande d'usure en composite carbone/carbone (ou C/C), qui est éventuellement imprégné de métal, tel que du cuivre ou un alliage contenant du cuivre (tel qu'un laiton ou un bronze), de l'aluminium ou un alliage d'aluminium ou du magnésium ou un alliage de magnésium.

L'imprégnation de métal est avantageuse dans les applications, dites de basse tension (BT), dans lesquelles la tension est inférieure à 3 kV environ. Dans ces applications, les courants sont de très forte intensité et nécessitent par conséquent une très grande conductivité électrique et thermique de la bande de frottement. L'imprégnation de métal n'est généralement pas nécessaire dans les applications, dites de haute tension, dans lesquelles la tension est typiquement supérieure à 10 kV.

Un composite C/C est un matériau solide comprenant des fibres de carbone (ou "substrat fibreux") noyées dans une matrice de carbone. Les fibres de carbone sont, par exemple, des fibres de brai, des fibres ex-polyacrylonitrile ou des fibres ex-viscose. Ces fibres peuvent se présenter sous différentes formes, telles que sous forme de tissu 2D ou 3D, de nappe unidirectionnelle ou de fibres aléatoires.

La matrice carbonée lie entre elles les fibres ou les mèches de carbone. Elle peut être obtenue de différentes manières, telles que par pyrolyse d'un composé carboné déposé en phase vapeur ou par cokéfaction (ou "carbonisation") après imprégnation ou mélange intime d'un brai ou d'une résine, telle qu'une résine phénolique ou furfurylique, ou par une combinaison de ces méthodes.

Dans le mode de réalisation préféré de l'invention, le composite C/C possède une forme texturée 3D (trois dimensions), telle que celle obtenue à partir d'un tissu 3D, ou quasiment 3D, telle que celle obtenue à partir de tissus 2D avec des ponts carbonés entre les plans 2D ou à partir de nappes unidirectionnelles avec des ponts carbonés entre les nappes, ou éventuellement à partir de nappes de mèches courtes distribuées aléatoirement dans des plans mais orientées sensiblement le long de ceux-ci avec des ponts carbonés entre les couches.

La demanderesse a constaté dans ces essais que, de manière surprenante, l'échauffement observé sur des bandes selon l'invention est nettement plus faible et plus homogène que celui observé sur des bandes de l'art antérieur.

L'invention a également pour objets les dispositifs de contact frottant, tels que les pantographes, les perches de trolley, les frotteurs de troisième rail ou les frotteurs industriels, comprenant au moins une bande de frottement selon l'invention.

### Figures

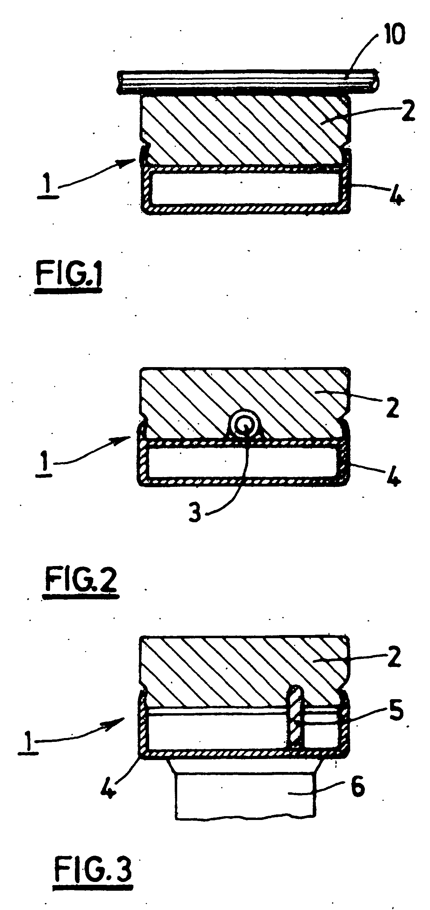

La figure 1 représente, en section transversale par rapport au sens long de la bande, une bande de frottement (1) de pantographe typique de l'art antérieur en contact avec une caténaire (10). La bande représentée comprend une bande d'usure (2) et un support-renfort (4). Le support-renfort (4) améliore la tenue mécanique de la bande d'usure (2) lorsque celle-ci est à base de graphite, de carbone amorphe ou d'un mélange de ceux-ci, et permet en outre de fixer la bande sur le pantographe.
La figure 2 représente, en section transversale par rapport au sens long de la bande, une bande de frottement (1) typique de l'art antérieur munie de moyens de détection d'avaries et/ou d'usure (3).
La figure 3 représente, en section transversale par rapport au sens long de la bande, une bande de frottement (1) typique de l'art antérieur munie de moyens de raccordement électrique (5, 6).

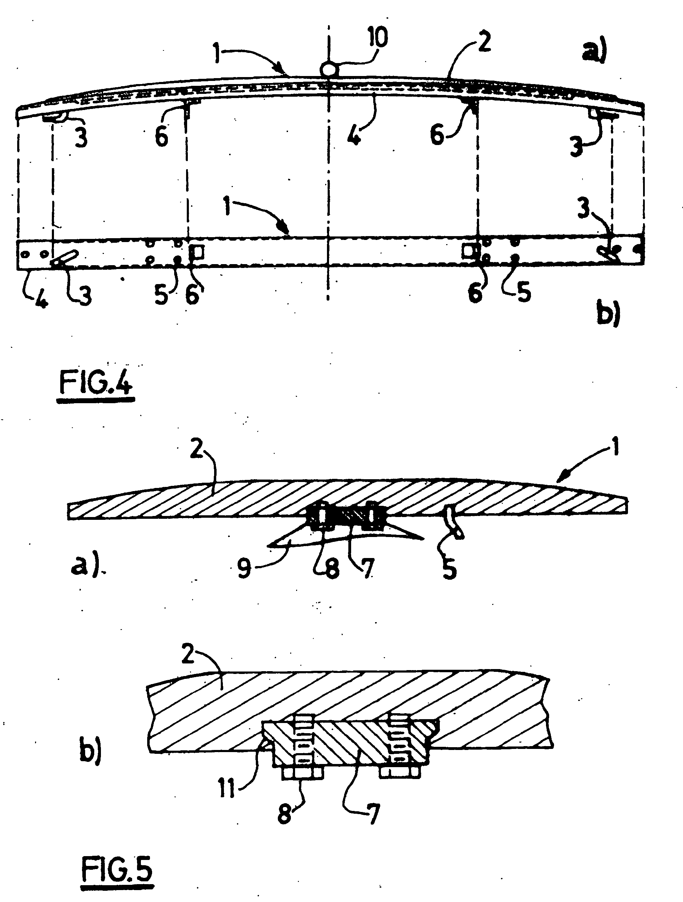

La figure 4 représente, vue de côté (a) et vue du dessous (b), une bande de frottement (1) typique de l'art antérieur munie d'un support-renfort (4) qui couvre la longueur de la bande de frottement.
La figure 5 représente, en coupe longitudinale, des moyens de fixation (7, 8, 11) sur le pantographe (9) de la bande de frottement selon l'invention.
La figure 6 illustre, de manière schématique, en coupe transversale, la structure interne d'une bande de frottement selon l'invention.
La figure 7 illustre, de manière schématique, l'orientation préférée de la texture 3D, ou quasiment 3D, de la bande de frottement selon l'invention par rapport au conducteur fixe.

### Description détaillée de l'invention

La bande de frottement (1) destinée à la captation de courant depuis un conducteur fixe (10), tel qu'un troisième rail au sol, un conducteur aérien ou une caténaire, vers un véhicule à l'arrêt ou en mouvement, selon l'invention, comprend une bande d'usure (2) et est caractérisée en ce que la bande d'usure (2) comprend, en tout ou partie, un matériau composite carbone/carbone (C/C), qui est éventuellement imprégné de métal, tel que du cuivre ou un alliage contenant du cuivre (tel qu'un laiton ou un bronze), de l'aluminium ou un alliage d'aluminium ou du magnésium ou un alliage de magnésium.

La forme de la bande de frottement ou de la bande d'usure est le plus souvent de forme allongée, mais elle peut être quelconque.

La nature du substrat fibreux détermine la structure du composite C/C. La texture est dite "fine" lorsque le substrat fibreux, qui est généralement comprimé, est constitué par un mat de fibres individuelles, ou un feutre, avec une répartition homogène et aléatoire de fibres individuelles, lesquelles sont éventuellement coupées à faible longueur (< 0,5 mm). Dans ce cas, le substrat est si finement réparti qu'il n'y a pratiquement pas d'élément de volume cubique de dimensions supérieures ou égales à 100 µm x 100 µm x 100 µm ne contenant pas de fibre de carbone, que ce soit à l'intérieur du substrat à l'état comprimé ou dans le composite final. La texture est dite "grossière" lorsque le substrat fibreux, qui est également généralement comprimé, est constitué par des tissus de mèches de fibres de carbone ou des répartitions aléatoires de segments de mèches (mèches coupées de longueur > 0,5 mm), chaque mèche renfermant au moins un millier de fibres individuelles. Dans ce cas, le substrat est réparti relativement grossièrement, de sorte qu'il y a beaucoup d'éléments de volume cubique de dimensions supérieures ou égales à 100 µm x 100 µm x 100 µm ne contenant pas de fibre de carbone, que ce soit à l'intérieur du substrat à l'état comprimé ou dans le composite final.

La matrice de carbone peut être obtenue suivant différentes techniques, telles que par infiltration, imprégnation ou mélange intime d'un liquide riche en carbone, tel qu'un brai ou une résine phénolique, qui est ensuite cokéfié pour laisser un squelette carboné autour des fibres, laissant ainsi un dépôt cokéfié, l'opération étant répétée autant de fois que nécessaire (typiquement 3 ou 4 fois), par infiltration d'un gaz riche en carbone dans des conditions thermodynamiques favorisant le craquage du gaz, laissant un dépôt de pyrocarbone sur les fibres, ou par une combinaison de ces techniques. Il est préférable, selon l'invention, de former la matrice de carbone par dépôt en phase vapeur (ou dépôt de pyrocarbone), de manière à obtenir un dépôt plus homogène et à éviter des ruptures de liaisons entre les fibres qui peuvent apparaître lorsque la matrice est obtenue par imprégnation (lesquelles ruptures sont provoquées par le retrait du produit d'imprégnation en cours de cokéfaction). La densification en phase vapeur présente par ailleurs l'avantage de produire un dépôt, dit de "pyrocarbone", très orienté, et donc graphitisable, qui est apte à conduire efficacement l'électricité et la chaleur même en l'absence de traitement de graphitisation.

La porosité résiduelle du matériau composite hors métal, c'est-à-dire la porosité du matériau composite avant l'éventuelle imprégnation de métal et accessible à cette imprégnation, est de préférence comprise entre 5 et 50 % environ, et de préférence encore entre 5 et 35 % environ (la quantité de métal contenu dans le composite est alors respectivement approximativement comprise entre 5 et 80 % en poids et entre 5 et 50 % en poids). Comme le montrent les essais présentés plus bas, une porosité résiduelle supérieure à environ 50 % conduit à un taux d'usure élevé si le degré de graphitisation est trop faible (cas E-2). Le composite C/C peut être amené à cette porosité par un traitement de densification par voie liquide ou gazeuse, ou une combinaison des deux. Il a été trouvé avantageux de réaliser la densification par voie gazeuse seule.

Il a été trouvé très avantageux que ledit substrat fibreux présente une texture grossière à cavités de grande dimension, c'est-à-dire dont la section est de préférence au moins égale à 0,1 mm² environ. Une telle texture facilite notamment la densification du composite et, si nécessaire, l'imprégnation de métal dans le composite.

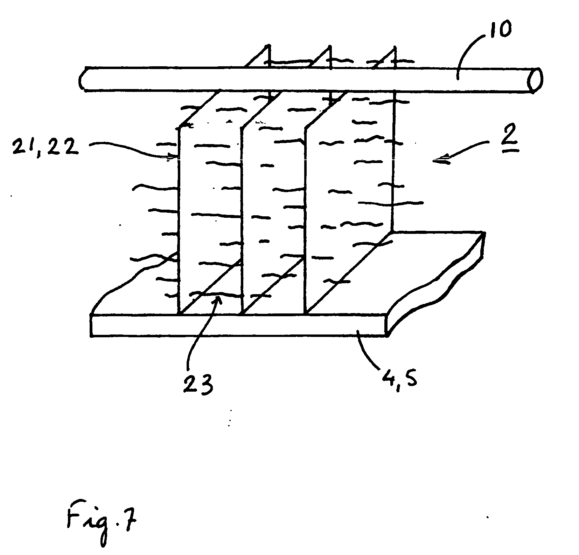

Dans un mode de réalisation préféré de l'invention, qui est illustré à la figure 6, le composite C/C comprend un substrat fibreux (21, 22, 23) à base de fibres de carbone servant de renfort et une matrice (211, 221, 231) en carbone, et est caractérisé en ce que :
a) ledit substrat fibreux comprend des couches 2D (21, 22) sensiblement parallèles, qui définissent une texture grossière à cavités de grande dimension (24), c'est-à-dire dont la section est de préférence au moins égale à 0,1 mm² environ, et des ponts carbonés (23) traversant lesdites cavités de grande dimension ;
b) ladite matrice comprend au moins une couche carbonée d'enrobage (211, 221, 231) dudit substrat fibreux.

Les ponts carbonés qui divisent les dites cavités de grande dimension ont une épaisseur comprise entre 10 et 100 µm et conduisent à la formation de cavités de petite dimension, mais préservent de préférence la texture grossière du composite provenant des cavités de grande dimension.

La ou les couches d'enrobage (211, 221, 231) confèrent une forte cohésion du substrat fibreux et facilitent le passage du courant entre les fibres et entre les mèches, notamment dans les cavités de grande dimension.

La ou les couches d'enrobages peuvent être obtenue par imprégnation d'une résine suivie d'une opération de cokéfaction. Elles sont de préférence obtenues par pyrolyse en phase gazeuse, de façon à permettre une graphitisation des liaisons carbonées entre les fibres. Il est également possible de former plusieurs couches d'enrobage avec l'une ou l'autre de ces méthodes ou en les combinant.

La ou les couches carbonées d'enrobage ont typiquement une épaisseur totale comprise entre 2 et 100 µm, et plus spécifiquement entre 5 et 30 µm. Les ponts ont typiquement une longueur de 5 à 100 µm et une épaisseur de 5 à 100 µm.

Les ponts (23) entre les couches sont de préférence obtenus par aiguilletage, ce qui permet de simplifier le procédé et de favoriser la diffusion du gaz ou l'imprégnation lors de la formation de la matrice. L'aiguilletage est de préférence modéré, c'est-à-dire que seulement environ 10 % des fibres sont détournées, ce qui permet de préserver les avantages de la texture grossière. Les ponts peuvent éventuellement être obtenus par carbonisation d'une résine riche en carbone ou provenir de la structure 3D même du substrat fibreux.

Les nappes peuvent être constituées de fibres aléatoires disposées en couches et de préférence sensiblement orientées dans le sens desdites couches (par exemple par compression). Les meilleurs résultats sont toutefois obtenus avec un substrat fibreux constitué principalement de tissus de fibres de carbones continues. Il a été trouvé très avantageux d'orienter la structure de la texture 3D ou quasiment 3D par rapport au conducteur fixe, de préférence de manière à ce que les plans, couches ou nappes de la structure soient perpendiculaires au conducteur fixe.

Dans le mode de réalisation préféré de l'invention, l'étape de formation des ponts est suivie d'une étape complémentaire de dépôt d'une couche d'enrobage par pyrolyse en phase gazeuse. La couche de pyrocarbone (211, 221, 231), qui produit une densification partielle, recouvre les fibres du substrat fibreux et les ponts, de sorte que les fibres et les ponts possèdent une partie centrale (210, 220, 230), qui est généralement non-orientée et qui assure surtout une fonction mécanique de cohésion du composite, et une partie superficielle (211, 221, 231), qui est essentiellement orientée et qui complète la fonction de cohésion et augmente sensiblement les conductivités électrique et thermique.

Suite à la densification partielle du substrat en phase vapeur, on obtient des couches d'enrobage en pyrocarbone, d'épaisseur comprise entre 2 et 100 µm.

Lesdits ponts carbonés peuvent prendre la forme de cloisons (ou voiles) transversales ou de filaments (ou colonnes) de carbone traversant les dites cavités de grande dimension. On observe, après imprégnation par une résine ou un brai et carbonisation, la présence de particules de carbone de petite dimension.

Le matériau ainsi obtenu présente typiquement une porosité ouverte allant de 15 à 30 % du composite C/C.

Il est quelquefois avantageux d'utiliser un composite C/C plus dense, auquel cas ladite matrice peut comprendre aussi des particules en carbone contenues dans lesdites cavités et obtenues par imprégnation de brai ou de résine à taux élevé de carbone, puis carbonisation. De manière générale, les cavités contiennent des particules en carbone n'adhérant pas ou adhérant peu aux parois des dites cavités. Un tel matériau selon l'invention a la composition volumique suivante : substrat fibreux entre 20 et 40 % vol. ; enrobage de pyrocarbone entre 40 et 60 % ; cloisons de pyrocarbone ou carbone entre 1 et 4 % ; particules carbone entre 10 et 17 % ; porosité résiduelle entre 5 et 15 %.

Selon l'invention, lesdites couches 2D du dit substrat fibreux à texture grossière sont de préférence constituées de mèches de fibres de carbone contenant plus de 1000 filaments sous forme de tissus, les intersections de mèches ou leur empilement conduisant à des porosités de section au moins égale à 0,1 mm². L'utilisation de tissus est particulièrement avantageuse par le fait qu'elle conduit à une grande continuité du substrat fibreux qui améliore les propriétés électriques et thermiques du composite. Il est également possible, mais moins avantageux, d'utiliser des mèches de fibres de carbone contenant également plus de 1000 filaments mais coupées à une longueur supérieure à 3 mm et réparties aléatoirement.

Dans le mode de réalisation préféré de l'invention, les couches 2D sont formées de tissus de mèches de fibres de carbone et les ponts sont formés par aiguilletage. Les ponts, qui se présentent sous la forme de filaments, sont alors constitués de fibres extraites des mèches et détournées dans une direction sensiblement perpendiculaire aux couches 2D et traversent les cavités et les mèches voisines. La ou les couches d'enrobage (211, 221, 231) revêtent les fibres (210, 220) constituant lesdites mèches et les fibres détournées (230) formant lesdits ponts. Il est particulièrement avantageux qu'au moins une couche d'enrobage soit un dépôt de pyrocarbone.

Le matériau composite selon l'invention possède de préférence un degré d'organisation cristalline proche de celui du graphite, c'est-à-dire qu'il possède un indice de graphitisation qui est de préférence supérieur ou égal à 0,4. Une telle organisation peut être obtenue par un traitement thermique du composite C/C à des températures égales ou supérieures à 2200 °C.

La bande de frottement selon l'invention peut être fabriquée par un procédé dans lequel :
a) on dépose les éléments du substrat fibreux (tels que des couches de tissus 2D) dans un moule ;
b) on comprime le substrat fibreux de manière à obtenir un taux volumique de substrat compris entre 20 et 40 %. La compression oriente, le cas échéant, les fibres courtes dans des plans sensiblement perpendiculaires à l'axe de compression ;
c) on forme des ponts à l'intérieur desdites grandes cavités dudit composite C/C, reliant les faces opposées desdites cavités, de manière à obtenir un composite C/C comprenant des cavités de petites dimensions, en partie limitées par des ponts et à porosité ouverte ;
d) on forme au moins une couche d'enrobage, de préférence par dépôt de pyrocarbone sur ledit substrat fibreux de manière à former des couches de pyrocarbone enrobant le substrat fibreux et à assurer ainsi une forte cohésion du substrat fibreux, et à former un composite C/C à taux volumique de pyrocarbone compris entre 40 et 60 % et comprenant des cavités oblongues de grandes dimensions, à porosité ouverte ;
e) on densifie, éventuellement, le composite C/C par dépôt de carbone sur lesdits ponts et couche(s) d'enrobage, avec un taux volumique compris entre 1 et 4 %, de manière à obtenir un composite C/C rigide, et à porosité ouverte comprise entre 15 et 35 vol. %.

Les ponts sont de préférence obtenus par aiguilletage du substrat fibreux selon les techniques connues. Il est éventuellement possible de combiner avantageusement l'aiguilletage avec la formation de ponts secondaires sous forme de cloisons ou de filaments par les méthodes thermochimiques décrites ci-dessus.

On peut éventuellement former des ponts sous forme de filaments par imprégnation du substrat fibreux avec une solution diluée d'une résine riche en carbone, de préférence une solution aqueuse, polymérisation de celle-ci, puis carbonisation de la résine polymérisée.

Selon une autre variante, on peut former des ponts sous forme de cloisons (ou voiles) par imprégnation dudit composite C/C avec une solution liquide, de préférence aqueuse, d'une matière filmogène, élimination du solvant et carbonisation de la matière filmogène, de manière à former des cloisons d'épaisseur typiquement inférieure à 1 µm. La matière filmogène est choisie parmi les matières polymériques organiques, d'origine naturelle ou synthétique, de préférence solubles dans l'eau. On la choisit de préférence parmi l'amidon, les protéines, l'agar-agar, l'alcool polyvinylique, des résines hydrosolubles riches en carbone.

On densifie de préférence le composite C/C par dépôt de pyrocarbone sur lesdits ponts, de manière à obtenir des filament ou cloisons d'épaisseur comprise entre 10 et 100 µm, et plus spécifiquement entre 10 et 60 µm, qui se raccordent solidairement à la (ou aux) couches enrobant le substrat fibreux. La densification par dépôt de pyrocarbone conduit à un épaississement des ponts qui augmente les conductivités électrique et thermique du composite C/C.

On peut également densifier par dépôt de carbone sur lesdits voiles, en imprégnant ledit substrat fibreux constitué de cavités de petites dimensions avec une solution diluée d'une résine riche en carbone et, après élimination du solvant, en carbonisant la résine, de manière à obtenir des ponts d'épaisseur comprise entre 5 et 50 µm, peu adhérentes aux couches de pyrocarbone enrobant le substrat fibreux.

Il est également possible de densifier le composite C/C par imprégnation avec du brai, ou une résine riche en carbone, puis carbonisation.

Selon les applications, en particulier lorsque les conditions d'utilisation élèvent la température de la partie superficielle de la bande au-delà de 600°C pendant un temps relativement long, on peut soumettre ledit composite C/C rigide et dense obtenu précédemment à un traitement de graphitisation.

L'imprégnation du métal peut être obtenue par infiltration de métal liquide dans la porosité résiduelle du composite C/C, c'est-à-dire la porosité restant ouverte après les phase de construction de la matrice de carbone du composite, et par solidification du métal infiltré. L'infiltration est généralement effectuée en autoclave, à des pressions importantes (typiquement de 20 à 200 bars) afin d'assurer une bonne infiltration du métal liquide dans la porosité.

Le matériau composite C/C de la bande d'usure, après une éventuelle imprégnation avec du métal, peut si nécessaire être également imprégné d'un produit de finition fluide, tel qu'un polymère (qui permet notamment d'augmenter ses caractéristiques mécaniques après polymérisation) ou un composé organique (tel qu'un brai, un goudron ou une huile, qui permettent notamment de la rendre hydrophobe ou de limiter le frottement). Le produit de finition remplit tout ou partie de la porosité résiduelle.

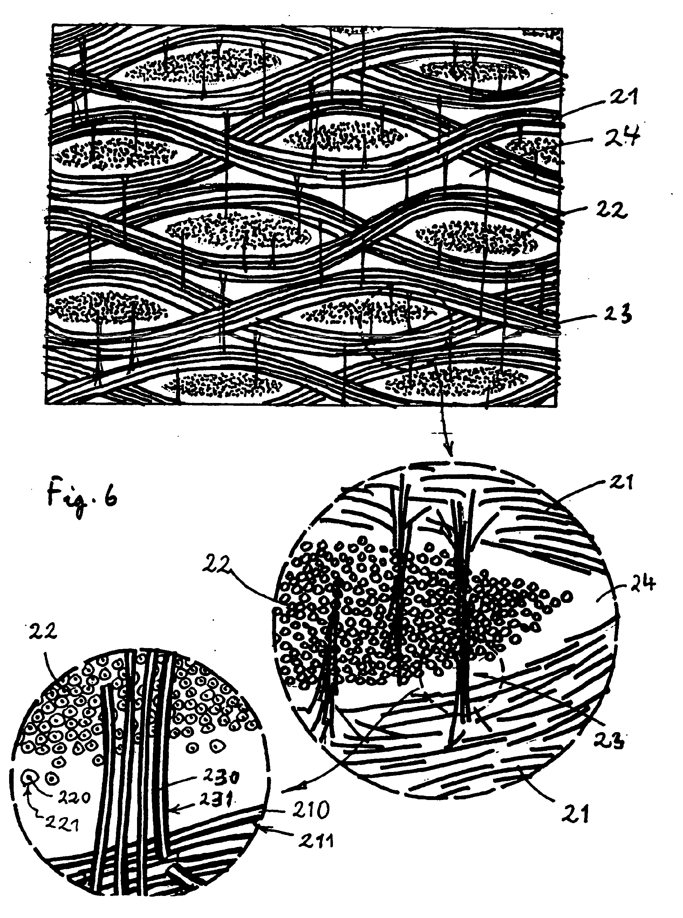

La bande de frottement (1) selon l'invention peut comprendre un support (4) muni de moyens de fixation (6) permettant de fixer la bande sur un dispositif de contact frottant. Etant données les caractéristiques mécaniques de la bande d'usure (2) selon l'invention, la bande de frottement (1) peut être autoporteuse, c'est-à-dire qu'elle ne comprend pas de support-renfort (4), ce qui permet de simplifier et d'alléger les dispositifs de captage. Dans le cas des pantographes, la bande de frottement selon l'invention peut alors être fixée directement au pantographe (9) ou, comme le montre la figure 5, elle peut être fixée au pantographe (9) à l'aide de moyens de fixation (7, 8, 11), tels qu'un plot de fixation (7), des vis ou boulons (8). Tel qu'illustré à la figure 5b), les moyens de fixation peuvent comprendre un emboîtement de type queue d'aronde (11) qui permet de faire coopérer la bande d'usure (2) et le plot de fixation (7).

La bande de frottement (1) selon l'invention peut comprendre des moyens (3) pour détecter les avaries et/ou l'usure de la bande d'usure. Elle peut également comprendre des moyens de raccordement électriques (5, 6), tels qu'un câble électrique (5) scellé dans la bande d'usure (2) ou une patte métallique (6).

La bande de frottement selon l'invention est avantageusement utilisée dans les dispositifs de contact frottant, tels que les pantographes, les perches de trolley, les frotteur de troisième rail et les frotteurs industriels.

### Essais comparatifs

Plusieurs bandes de frottement en composites C/C imprégné ou non de cuivre selon l'invention ont été fabriquées et mises à l'essai afin de comparer leurs propriétés à celles des bandes de frottement en graphite imprégné de cuivre de l'art antérieur.

Le tableau I donne, par famille, la structure et la voie de densification des bandes de frottement selon l'invention fabriquées pour ces essais comparatifs.

L'architecture A1 correspond à des mats de fibres de carbone empilés et aiguilletés entre eux, formant un substrat de type aléatoire, le taux volumique de fibres étant de 16 %. L'architecture A2 correspond à des tissus de fibres de carbone continues, pré-imprégnés, empilés et comprimés entre eux, le taux volumique de fibres étant de 40 %. L'architecture A3 correspond à des tissus de fibres de carbones continues, empilés et aiguilletés entre eux, le taux volumique de fibres étant de 15 %. L'architecture A4 correspond à des tissus de fibres de carbone, coupées et filées, empilés et aiguilletés entre eux, le taux volumique de fibres étant de 15 %.

La voie de densification D1 correspond à une voie liquide seule. La voie D2 correspond à une densification par voie gazeuse seule. La voie D3 correspond à une voie de densification gazeuse suivie d'une densification par voie liquide.

**Tableau I**

| Famille | Architecture du substrat fibreux | | | | Origine de la matrice carbonée | | |
|---|---|---|---|---|---|---|---|
| | A1 | A2 | A3 | A4 | D1 | D2 | D3 |
| A | x | | | | x | | |
| B | x | | | | | x | |
| C | x | | | | | | x |
| D | | x | | | | x | |
| E | | | x | | | x | |
| F | | | | x | x | | |
| G | | | | x | | x | |

Chaque famille de bandes de frottement comprend une ou plusieurs bandes ayant subi un certain degré de densification (caractérisé par la porosité résiduelle disponible avant imprégnation) et de graphitisation (caractérisé par les températures de traitement thermique après densification) avant imprégnation de cuivre. La famille E comprend 6 bandes correspondant à des degrés de densification et de graphitisation différents.

Toutes les bandes ont été imprégnées de cuivre, sauf les bandes E-5 et E-6 qui n'ont pas été imprégnées de métal. L'imprégnation de cuivre a été réalisée suivant le même procédé pour toutes les bandes mises à l'essai, à savoir : un chauffage des bandes sous vide jusqu'à une température de 1200 °C, suivi d'une immersion dans un bain de cuivre liquide (sous une pression de 140 bars appliquée sur la surface du bain d'imprégnation), puis le retrait des bandes du bain et le refroidissement des bandes sous une pression d'azote de 100 bars.

Le tableau II donne les valeurs de ces paramètres de fabrication pour chaque famille.

**Tableau II**

| Famille et Variantes | Porosité résiduelle avant imprégnation de cuivre (en % du volume) | Température du traitement thermique avant imprégnation de cuivre |
|---|---|---|
| A | 16 % | 2700 °C |
| B | 31 % | 2700 °C |
| C | 16 % | 2700 °C |
| D | 17 % | 2700 °C |
| E-1 | 53 % | 2700 °C |
| E-2 | 53 % | 2000 °C |
| E-3 | 36 % | 2700 °C |
| E-4 | 35 % | 2000 °C |
| E-5 | 50 % | 2700 °C |
| E-6 | 30 % | 2700 °C |
| F | 32 % | 2700 °C |
| G | 24 % | 2700 °C |

Les bandes selon l'invention ont été soumises à des essais de frottement dans les conditions suivantes : une force d'appui de 5,6 daN, une intensité de 200 A/cm (cm linéaire) et une vitesse de 15 km/h, simulant ainsi un balayage de la caténaire à environ 300 km/h. Les plans de la texture quasi-3D des bandes étaient orientées perpendiculairement à la caténaire.

Le tableau III donne des résultats obtenus pour les bandes selon l'invention mises à l'essai et les compare à la valeur typique obtenue pour une bande de frottement en graphite imprégné cuivre représentative de l'art antérieur utilisé sur le matériel roulant de plusieurs réseaux ferroviaires européens. La résistivité électrique a été mesurée par la méthode en 4 points.

Les résultats de résistance à l'impact montrent que les bandes selon l'invention sont nettement moins fragiles que celles de l'art antérieur à base de graphite imprégné cuivre, c'est-à-dire que les bandes selon l'invention présentent une résilience satisfaisante pour ne pas casser à la moindre amorce de rupture. Les résultats de ces essais montrent également qu'en général les produits à base de composite C/C imprégné par du cuivre ont des taux d'usure inférieurs à ceux de l'art antérieur à base de graphite imprégné de cuivre (dont l'utilisation est de plus en plus préférée à celle des bandes essentiellement métallique).

**Tableau III**

| Bande de frottement mise à l'essai | Taux d'usure (mm/100 km) | Masse volumique (g/cm³) | Résistance à la flexion (MPa) | Résistivité électrique (µΩ.cm) | Résistance à l'impact (test Izod) (J/cm²) |
|---|---|---|---|---|---|
| Art antérieur | 12 à 16 | 2,30 | 85 | 700 | 0,09 |
| A | 0,27 | 1,77 | 46 | 770 | 0,7 |
| B | 0,18 | 2,12 | 65 | 650 | 0,8 |
| C | 0,35 | 1,80 | 47 | 730 | 0,8 |
| D | 0,9 | 1,88 | 120 | 1200 | 4,1 |
| E-1 | 0,71 | 1,77 | 25 | 680 | 1,4 |
| E-2 | 3,0 | 1,65 | 30 | 970 | 1,2 |
| E-3 | 0,05 | 2,12 | 40 | 630 | 2,4 |
| E-4 | 0,08 | 2,01 | 50 | 1080 | 2,1 |
| E-5 | 0,3 | 1,0 | - | - | - |
| E-6 | 0,13 | 1,35 | - | - | - |
| F | 1,2 | 1,78 | 48 | 840 | 1,3 |
| G | 0,28 | 1,82 | 53 | 710 | 1,8 |

Les essais simulant le captage à l'arrêt (dans lesquels on applique une intensité de courant de 140 A/cm linéaire sur une bande d'une largeur de 50 mm) ont montré que la caténaire s'échauffe nettement moins avec les bandes composites C/C selon l'invention qu'avec les bandes carbonées de l'art antérieur. Typiquement, avec les bandes selon l'invention, la température mesurée se stabilisait rapidement (en moins d'une demi-heure) à une valeur de 40 °C, alors que, avec des bandes de l'art antérieur, la température croissait sans arrêt et atteignait des valeurs supérieures à 110 °C en une dizaine de minutes. La demanderesse attribue cette différence à la présence de grandes fibres sensiblement continues dans le composite et de ponts entre les fibres.

Les essais sur banc de simulation, qui simulent un balayage caténaire à haute vitesse (environ 300 km/h), ont montré que les pantographes selon l'invention se dégradent moins que les pantographes de l'art antérieur lorsque l'intensité du courant atteint des valeurs très élevées. Typiquement, l'usure des pantographes de l'art antérieur était d'environ 12 à 16 mm/100 km, alors qu'elle était aisément inférieure ou égale à environ 0,3 mm/100 km avec des bandes en composite C/C (non imprégné de métal) selon l'invention et d'environ 0,13 mm/100 km avec des bandes en composite C/C imprégné de cuivre selon l'invention. Par extrapolation des résultats, la version E, avec une densification très poussée par dépôt de pyrocarbone et tendant vers une porosité résiduelle de 10 %, serait donc excellente en durée de vie et permettrait d'éviter le recours à une imprégnation de métal.

La demanderesse a constaté que les liaisons entre les couches 2D de la texture quasiment 3D obtenues par les ponts entre lesdites couches 2D sont relativement lâches, mais que, de manière surprenante, elles confèrent une excellente résistance au délaminage, tout en préservant des propriétés physiques de caractère essentiellement 3D, telles que les conductivités électriques et thermiques pratiquement isotropes.

La demanderesse a également constaté que ces liaisons conduisent à une porosité apte à produire un réseau de métal imprégné qui, comme le montrent les exemples, donne un taux d'usure très faible. Typiquement, le métal d'imprégnation occupe les pores entre 10 et 20 µm environ et de 30 % à 40 % environ du volume poreux, le volume poreux résiduel après imprégnation de métal étant de l'ordre de 30 à 35 %.

La demanderesse a également remarqué que, de manière étonnante, l'imprégnation de métal des pantographes selon l'invention pouvait ne pas être nécessaire dans les applications BT, notamment lorsque la densification partielle est obtenue par pyrolyse en phase gazeuse (c'est-à-dire lorsque l'enrobage des fibres est à base de pyrocarbone).

### Avantages de l'invention

Les bandes de frottement selon l'invention permettent de réduire les coûts d'exploitation notamment en raison d'une usure par km qui peut être divisée par un facteur allant jusqu'à 20 ou plus.

Les bandes de frottement selon l'invention présentent également l'avantage d'une plus grande sécurité d'exploitation que les bandes de l'art antérieur en graphite imprégné en raison de leur capacité à subir des chocs mécaniques sans casser.

Les bandes de frottement selon l'invention présentent en outre la possibilité de simplifier et d'alléger les dispositifs de captage attachés au pantographe en réduisant la taille des supports métalliques nécessaires au soutien des produits graphite fragiles de l'art antérieur, voire en les éliminant.

## Revendications

1. Bande de frottement (1), destinée à la captation de courant depuis un conducteur fixe (10) vers un véhicule à l'arrêt ou en mouvement, comprenant une bande d'usure (2) comprenant, en tout ou partie, un matériau composite carbone/carbone (C/C) comprenant un substrat fibreux et une matrice en carbone, **caractérisée en que** ledit matériau composite C/C se présente sous forme texturée 3D ou quasiment 3D apte à être orientée par rapport au conducteur fixe.

2. Bande de frottement selon la revendication 1, **caractérisée en ce que** ledit substrat fibreux présente une texture grossière à cavités de grande dimension, c'est-à-dire dont la section est de préférence au moins égale à 0,1 mm² environ.

3. Bande de frottement selon la revendication 1 ou 2, **caractérisée en ce que** ladite matrice en carbone comprend au moins un dépôt de pyrocarbone, c'est-à-dire un dépôt obtenu par pyrolyse d'un composé carboné déposé en phase vapeur.

4. Bande de frottement selon l'une quelconque des revendications 1 à 3, **caractérisée en ce que** ledit substrat fibreux comprend des tissus de fibres de carbone continues.

5. Bande de frottement selon la revendication 1, **caractérisée en ce que** ledit composite C/C se présente sous forme texturée 3D obtenue à partir de tissu 3D.

6. Bande de frottement selon la revendication 1, **caractérisée en ce que** ledit composite C/C se présente sous forme texturée de forme quasiment 3D obtenue à partir de tissus 2D avec des ponts entre les plans 2D ou à partir de nappes unidirectionnelles avec des ponts entre les nappes.

7. Bande de frottement selon la revendication 6, **caractérisée en ce que** ledit substrat fibreux comprend des couches 2D (21, 22) sensiblement parallèles, qui définissent une texture grossière à cavités de grande dimension (24), c'est-à-dire dont la section est de préférence au moins égale à 0,1 mm² environ, et des ponts carbonés (23) traversant lesdites cavités de grande dimension, et **en ce que** ladite matrice comprend au moins une couche carbonée d'enrobage (211, 221, 231) dudit substrat fibreux.

8. Bande de frottement selon la revendication 6 ou 7, **caractérisée en ce que** lesdits ponts sont obtenus par aiguilletage.

9. Bande de frottement selon la revendication 7 ou 8, **caractérisée en ce que** ladite au moins une couche carbonée d'enrobage est un dépôt de pyrocarbone.

10. Bande de frottement selon l'une quelconque des revendications 7 à 9, **caractérisée ce que** l'épaisseur totale de la ou des couches carbonées d'enrobage est comprise entre 2 et 100 µm.

11. Bande de frottement selon l'une quelconque des revendications 6 à 10, **caractérisée en ce que** lesdits ponts ont une épaisseur comprise entre 10 et 100 µm.

12. Bande de frottement selon l'une quelconque des revendications 5 à 11, **caractérisée en ce que** ladite structure 3D ou quasiment 3D est orientée par rapport au conducteur fixe de manière à ce que les plans, couches ou nappes de la structure soient perpendiculaires au conducteur fixe.

13. Bande de frottement selon l'une quelconque des revendications 1 à 12, **caractérisée en ce que** la porosité résiduelle du matériau composite est comprise entre 5 et 50 % vol. environ, et de préférence encore entre 5 et 35 % voL environ.

14. Bande de frottement selon l'une quelconque des revendications 1 à 13, **caractérisée en ce que** le matériau composite possède un degré d'organisation cristalline proche de celui du graphite.

15. Bande de frottement selon l'une quelconque des revendications 1 à 14, **caractérisée en ce que** la matrice en carbone comprend au moins un dépôt cokéfié obtenu par imprégnation d'un liquide riche en carbone, tel qu'un brai ou une résine phénolique, suivie d'une opération de cokéfaction.

16. Bande de frottement selon l'une quelconque des revendications 1 à 15, **caractérisée en ce que** ledit matériau est imprégné de métal.

17. Bande de frottement selon la revendication 16, **caractérisée en ce que** ledit métal est du cuivre, un alliage de cuivre, de l'aluminium, un alliage d'aluminium, du magnésium ou un alliage de magnésium.

18. Bande de frottement selon l'une quelconque des revendications 1 à 17, caracténsée en ce que le matériau composite C/C est également imprégné d'un produit de finition fluide, tel qu'un polymère, un brai, un goudron ou une huile.

19. Bande de frottement selon l'une quelconque des revendications 1 à 18, **caractérisée en ce qu'**elle comprend un support (4) muni de moyens de fixation (6).

20. Bande de frottement selon l'une quelconque des revendications 1 à 19, **caractérisée en ce que** la bande d'usure (2) est autoporteuse, c'est-à-dire que la bande de frottement (1) ne comprend pas de support-renfort (4).

21. Dispositif de contact frottant comprenant au moins une bande de frottement (1) selon l'une quelconque des revendications 1 à 20.

22. Dispositif selon la revendication 21, **caractérisé en ce qu'**il est choisi dans le groupe comprenant les pantographes, les perches de trolley, les frotteur de troisième rail et les frotteurs industriels.

## Claims

1. Contact strip (1) designed for picking up current from a fixed conductor (10) to a stopped or moving vehicle, comprising a wear strip (2) made entirely or partly of a carbon / carbon (C/C) composite material comprising a fibrous substrate and a carbon matrix, **characterised in that** the said C/C composite material has a 3D or quasi-3D textured form that can be oriented with respect to the fixed conductor.

2. Contact strip according to claim 1, **characterised in that** the said fibrous substrate has a coarse texture with large cavities, in other words having a section preferably equal to at least approximately 0.1 mm².

3. Contact strip according to claim 1 or 2, **characterised in that** the said carbon matrix comprises at least one pyrocarbon deposit, in other words a deposit obtained by pyrolysis of a carbonaceous compound deposited in the vapour phase.

4. Contact strip according to any one of claims 1 to 3, **characterised in that** the said fibrous substrate comprises fabrics of continuous carbon fiber.

5. Contact strip according to claim 1, **characterised in that** the said C/C composite has a 3D textured form obtained from a 3D fabric.

6. Contact strip according to claim 1, **characterised in that** the said C/C composite has a quasi-3D textured form obtained from 2D fabrics with bridges between the 2D planes or from single directional platelets with bridges between the platelets.

7. Contact strip according to claim 6, **characterised in that** the said fibrous substrate comprises substantially parallel 2D layers (21, 22) that define a coarse texture with large cavities (24), in other words with a section preferably equal to at least about 0.1 mm², and carbonaceous bridges (23) passing through the said large cavities, and **in that** the said matrix comprises at least one carbonaceous coating layer (211, 221, 231) of the said fibrous substrate.

8. Contact strip according to claim 6 or 7, **characterised in that** the said bridges are obtained by needle punching.

9. Contact strip according to claim 7 or 8, **characterised in that** the said at least one carbonaceous coating layer is a pyrocarbon deposit.

10. Contact strip according to any one of claims 1 to 9, **characterised in that** the total thickness of the carbonaceous coating layer(s) is between 2 and 100 µm.

11. Contact strip according to any one of claims 6 to 10, **characterised in that** the said bridges are between 10 and 100 µm thick.

12. Contact strip according to any one of claims 5 to 11, **characterised in that** the said 3D or quasi-3D structure is oriented with respect to the fixed conductor such that the planes, layers or platelets of the structure are perpendicular to the fixed conductor.

13. Contact strip according to any one of claims 1 to 12, **characterised in that** the residual porosity of the composite material is between about 5 and 50% by volume, and preferably between about 5 and 35% by volume.

14. Contact strip according to any one of claims 1 to 13, **characterised in that** the composite material has a degree of crystalline organisation similar to that of graphite.

15. Contact strip according to any one of claims 1 to 14, **characterised in that** the carbon matrix comprises at least one cokefied deposit obtained by impregnation with a carbon-rich liquid such as pitch or phenolic resin, followed by a coking operation.

16. Contact strip according to any one of claims 1 to 15, **characterised in that** the said material is impregnated with metal.

17. Contact strip according to claim 16, **characterised in that** the said metal is copper, a copper alloy, aluminium, an aluminium alloy, magnesium or a magnesium alloy.

18. Contact strip according to any one of claims 1 to 17, **characterised in that** the C/C composite material is also impregnated with a fluid finishing product such as a polymer, a pitch, a tar or an oil.

19. Contact strip according to any one of claims 1 to 18, **characterised in that** it comprises a support (4) provided with attachment means (6).

20. Contact strip according to any one of claims 1 to 19, **characterised in that** the wear strip (2) is self-supporting, in other words the contact strip (1) does not include a reinforcement support (4).

21. Friction contact device comprising at least one contact strip (1) according to any one of claims 1 to 20.

22. Device according to claim 21, **characterised in that** it is chosen from the group consisting of pantographs, trolley poles, third rail slippers and industrial slippers.

## Patentansprüche

1. Schleifleiste (1) zur Stromabnahme von einer fest montierten Fahrleitung (10) zu einem stehenden oder bewegten Fahrzeug mit einem Verschleißband (2), das ganz oder teilweise aus einem Kohlenstoff/Kohlenstoff-Verbundwerkstoff (C/C) mit einem Fasersubstrat und einer Kohlenstoffmatrix besteht, **dadurch gekennzeichnet, dass** der C/C-Verbundwerkstoff in texturierter 3D- oder Quasi-3D-Form vorliegt, die zur fest montierten Fahrleitung orientierbar ist.

2. Schleifleiste nach Anspruch 1, **dadurch gekennzeichnet, dass** das Fasersubstrat eine grobe Textur mit großen Hohlräumen aufweist, d.h. deren Querschnitt vorzugsweise mindestens etwa 0,1 mm² beträgt.

3. Schleifleiste nach Anspruch 1 oder 2, **dadurch gekennzeichnet, dass** die Kohlenstoffmatrix mindestens eine Pyrokohlenstoffabscheidung aufweist, d.h. eine Abscheidung, die durch Pyrolyse einer aus der Dampfphase abgeschiedenen Kohlenstoffverbindung erhalten wird.

4. Schleifleiste nach irgendeinem der Ansprüche 1 bis 3, **dadurch gekennzeichnet, dass** das Fasersubstrat Gewebe aus endlosen Kohlenstofffasern aufweist.

5. Schleifleiste nach Anspruch 1, **dadurch gekennzeichnet, dass** der C/C-Verbund in texturierter 3D-Form vorliegt, die aus einem 3D-Gewebe gewonnen wird.

6. Schleifleiste nach Anspruch 1, **dadurch gekennzeichnet, dass** der C/C, Verbund in texturierter Quasi-3D-Form vorliegt, die aus einem 2D-Gewebe mit Brücken zwischen den 2D-Ebenen oder aus Unidirektionalgelegen mit Brücken zwischen den Gelegen gewonnen wird.

7. Schleifleiste nach Anspruch 6, **dadurch gekennzeichnet, dass** das Fasersubstrat im Wesentlichen parallele 2D-Schichten (21, 22) aufweist, die eine grobe Textur mit großen Hohlräumen (24) definieren, d.h. deren Querschnitt vorzugsweise mindestens 0,1 mm² beträgt, sowie Kohlenstoffbrücken (23) aufweist, die die großen Hohlräume durchqueren, und dass die Matrix mindestens eine umhüllende Kohlenstoffschicht (211, 221, 231) für das Fasersubstrat aufweist.

8. Schleifleiste nach Anspruch 6 oder 7, **dadurch gekennzeichnet, dass** die Brücken durch Nadelung gewonnen werden.

9. Schleifleiste nach Anspruch 7 oder 8, **dadurch gekennzeichnet, dass** die mindestens eine umhüllende Kohlenstoffschicht eine Pyrokohlenstoffabscheidung ist.

10. Schleifleiste nach irgendeinem der Ansprüche 7 bis 9, **dadurch gekennzeichnet, dass** die Gesamtdicke der umhüllenden Kohlenstoffschicht oder -schichten 2 bis 100 µm beträgt.

11. Schleifleiste nach irgendeinem der Ansprüche 6 bis 10, **dadurch gekennzeichnet, dass** die Brücken eine Dicke von 10 bis 100 µm haben.

12. Schleifleiste nach irgendeinem der Ansprüche 5 bis 11, **dadurch gekennzeichnet, dass** die 3D- oder Quasi-3D-Struktur so zur fest montierten Fahrleitung orientiert ist, dass die Ebenen, Schichten oder Gelege der Struktur quer zur fest montierten Fahrleitung liegen.

13. Schleifleiste nach irgendeinem der Ansprüche 1 bis 12, **dadurch gekennzeichnet, dass** die Restporosität des Verbundwerkstoffs etwa 5 bis 50 Vol.-% und besonders bevorzugt etwa 5 bis 35 Vol.-% beträgt.

14. Schleifleiste nach irgendeinem der Ansprüche 1 bis 13, **dadurch gekennzeichnet, dass** der Verbundwerkstoff einen kristallinen Organisationsgrad aufweist, der nahe bei dem von Graphit liegt.

15. Schleifleiste nach irgendeinem der Ansprüche 1 bis 14, **dadurch gekennzeichnet, dass** die Kohlenstoffmatrix mindestens einen verkokten Niederschlag aufweist, der durch Imprägnierung einer kohlenstoffreichen Flüssigkeit wie Pech oder Phenolharz und einen sich daran anschließenden Verkokungsvorgang gewonnen wird.

16. Schleifleiste nach irgendeinem der Ansprüche 1 bis 15, **dadurch gekennzeichnet, dass** der Werkstoff metallimprägniert ist.

17. Schleifleiste nach Anspruch 16, **dadurch gekennzeichnet, dass** es sich bei dem Metall um Kupfer, eine Kupferlegierung, Aluminium, eine Aluminiumlegierung, Magnesium oder eine Magnesiumlegierung handelt.

18. Schleifleiste nach irgendeinem der Ansprüche 1 bis 17, **dadurch gekennzeichnet, dass** der C/C-Verbundwerkstoff zusätzlich mit einem flüssigen Veredelungsprodukt wie einem Polymer, einem Pech, einem Teer oder einem Öl imprägniert ist.

19. Schleifleiste nach irgendeinem der Ansprüche 1 bis 18, **dadurch gekennzeichnet, dass** sie einen Träger (4) versehen mit Befestigungsmitteln (6) aufweist.

20. Schleifleiste nach irgendeinem der Ansprüche 1 bis 19, **dadurch gekennzeichnet, dass** das Verschleißband (2) selbsttragend ist, d.h. dass die Schleifleiste (1) keinen Verstärkungsträger (4) aufweist.

21. Schleifkontaktvorrichtung mit mindestens einer Schleifleiste (1) nach irgendeinem der Ansprüche 1 bis 20.

22. Vorrichtung nach Anspruch 21, **dadurch gekennzeichnet, dass** sie aus der Gruppe bestehend aus den Scherenstromabnehmern, Stangenstromabnehmem, Schleifstücken für Stromschienen und Schleifstücken für die Industrie ausgewählt ist.
